# EUROPEAN PATENT SPECIFICATION

(11) **EP 2 226 546 B1**
(45) Date of publication and mention of the grant of the patent: **25.12.2019**
(21) Application number: 09425089.1
(22) Date of filing: 06.03.2009
(51) Int. Cl.: F16L 55/124

(54) **HYDRAULIC PLUGGING MACHINE FOR INTERVENTIONS OF INSTALLATION, REPAIR, MAINTENANCE ON PRESSURE FLUIDS SUPPLY PIPING**
HYDRAULISCHE MASCHINE ZUM VERSCHLIESSEN VON VERSORGUNGSROHREN FÜR DRUCKFLÜSSIGKEITEN BEI DER INSTALLATION, REPARATUR ODER WARTUNG
MACHINE D'OBTURATION HYDRAULIQUE POUR DES INTERVENTIONS D'INSTALLATION, RÉPARATION ET MAINTENANCE DE CANALISATIONS D'ALIMENTATION EN FLUIDES SOUS PRESSION

(43) Date of publication of application: 08.09.2010
(60) Divisional application: 13187624.5
(73) Proprietor: T.D. Williamson Italiana S.r.l., 29029 Niviano di Rivergaro (PC) (IT)
(72) Inventor: Odori, Mauro, 52020 Castelfranco di Sopra (AR) (IT)
(74) Representative: Guérin, Jean-Philippe

(56) References cited:
- EP-A- 1 314 926
- US-A1- 2008 017 390

## Description

Any intervention on pressure fluids supply piping in service that needs steel piping to be cut and then jointed by welding obliges the operators to stop the flow upstream and downstream the intervention area by means of proper plugging machines available on the market (not to stop the service a by-pass pipe is assembled connecting the machines).

Plugging machines are assembled on the pipe object of the intervention by means of proper shaped fittings and valves (with great dimensional ranges) that are welded to the pipe.

The plugging machines available on the market are conceived according to possible operating modalities: in the first, the plug is made by a steel body coated with rubber and held by a heavy steel frame that is inserted (through the fitting and the valve) inside the pipe avoiding that the pressure of the fluid can displace the plug, while it's the same pressure of the fluids that presses the rubber against the inner surface of the pipe obtaining the seal; in the second, the plug is composed by two steel disks (with a rubber gasket between them) inserted inside the pipe by means of a steel rod: through the rod is possible to operate a taper gear system that brings the disks near making them press the gasket against the inner surface of the pipe obtaining the seal.

Both these solutions have advantages (in the first the heavy steel structure avoids the plug to be displaced; in the second the seal on the inner surface of the pipe is more efficient) and drawbacks (in the first a direct control of the seal isn't possible, as it is obtained by means of the fluid pressure; in the second the plug is inserted and held by a steel rod that can be unfit with high pressures and can have dangerous consequences in case of damage of the operating gears, and moreover, with high pressured fluids, the rubber gasket can be "extruded", that is can be extracted from the disks by the pressure).

An oleodynamic plugging machine according to the preamble of claim 1 is known from US 2008/0017390 A1.

### OLEODYNAMIC PLUGGING MACHINE

The oleodynamic plugging machine is composed by the following parts:
1. Main frame of the machine: it is composed by a steel cylindrical casing flanged in the lower side to by be assembled on the fitting/valve. On the lateral surface of the casing there are fittings for the by-pass and the ventilation valve. On the upper part of the casing there is the exit (through a proper sealing gasket) of the steel rod for the insertion of the plug inside the pipe object of the intervention: the rod is operated by an oleodynamic piston assembled on four columns over the top of the casing. The end of the piston has a hole for the movability of the machine. On the lower end of the insertion rod is assembled a heavy round steel structure (coated on its lateral surface with low-friction material) which, being inserted during the operations in the hole made on the pipe, has the function to avoid the plug to be displaced when inside the pipe. On the upper and lower surfaces of the round structure there are holes to let the fluid enter the casing and then the by-pass. On the lower surface of the round structure is also assembled the hinge of the body of the plug.
2. Body of the Plug: it is attached to the round structure by a hinge to be able to rotate for the insertion in the pipe object of the intervention. It is composed by a hard steel body inside which is built the piston for the oleodynamic operation of the plug. Operating the piston, two steel taper disks are brought near (only the external disks is moved) causing the compression in radius direction of a rubber gasket torus shaped: the gasket will this way be pressed against the inner surface of the pipe making the seal of the plug. Between the movable taper disk and the gasket there are some properly shaped steel plates that (by means of guides made on them), while the plug is operated, follow the expansion of the gasket (to which are attached) in radial direction: their function is to avoid that the gasket is "extruded", that is extracted from its place by the fluid pressure. When the plug is released (the movable taper disk is brought far from the fixed one under the push of the oleodynamic piston) the rubber gasket comes back to its unloaded dimensions and the steel plates return in their original positions. Inside the body of the plug are made the ducts for inlet and outlet of the oil for the piston operation (the oil circuit is equipped with a safety valve, made in the body of the plug too, that avoids accidental openings or closures of the plug in case of any damage) and the duct for nitrogen injection (in case the pipe conveys flammable or explosive fluids nitrogen is used to prevent explosive atmosphere to establish) directly inside the pipe with no need to weld a special fitting for it. On the movable taper disk there's a wheel to make easier the positioning of the plug inside the pipe. On the fixed disk there's an edge which goes in contact with the lower part of the pipe and another one (on the upper part of the disk) that goes in contact with the wall of the hole drilled on the pipe in order to grant the maximum stability of the plug under the pressure of the fluid.

### OPERATION

After welding the fittings one upstream and one downstream the intervention area and after drilling the pipe with the drilling machine below the fittings, the plugging machines are assembled. Operating the external pistons of the plugging machines, the plugs are inserted in the pipe. When the plugs are positioned, the inner pistons of the plugs are operated so that the rubber gasket is pressed against the inner surface of the pipe making the seal; the radial expansion of the rubber causes the radial movement of the anti-extrusion steel plates. Now the fluid is plugged on both sides of the intervention area and it is possible to evacuate the fluid between the plugs (through proper ventilation pipes) and start the intervention. When the work is over, the inner piston of the plug is operated to de-activate the plug and it is extracted from the plug by means of the external oleodynamic piston. The plugging machine can now be disassembled.

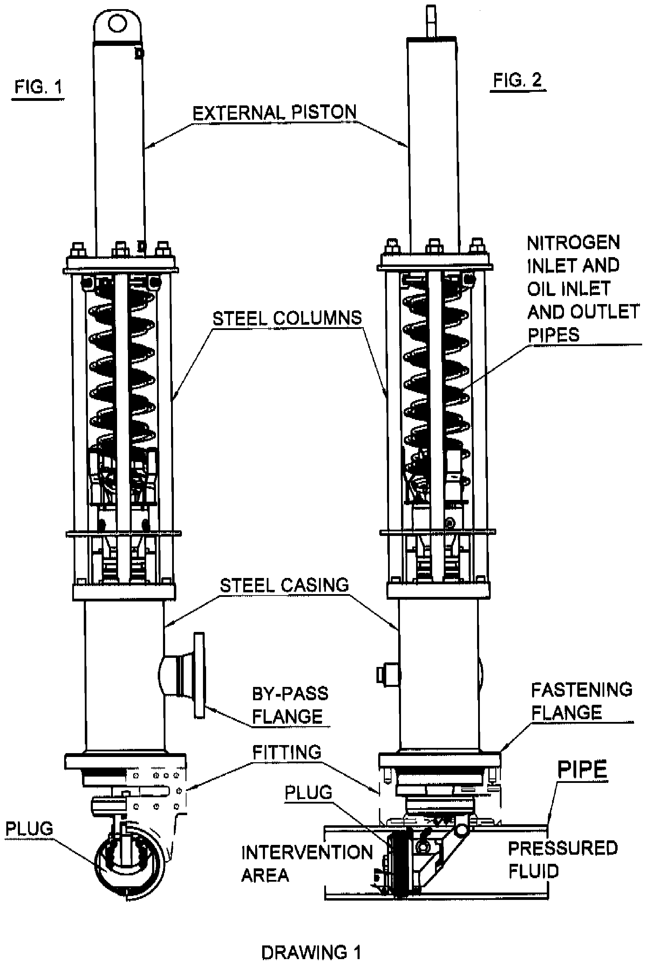

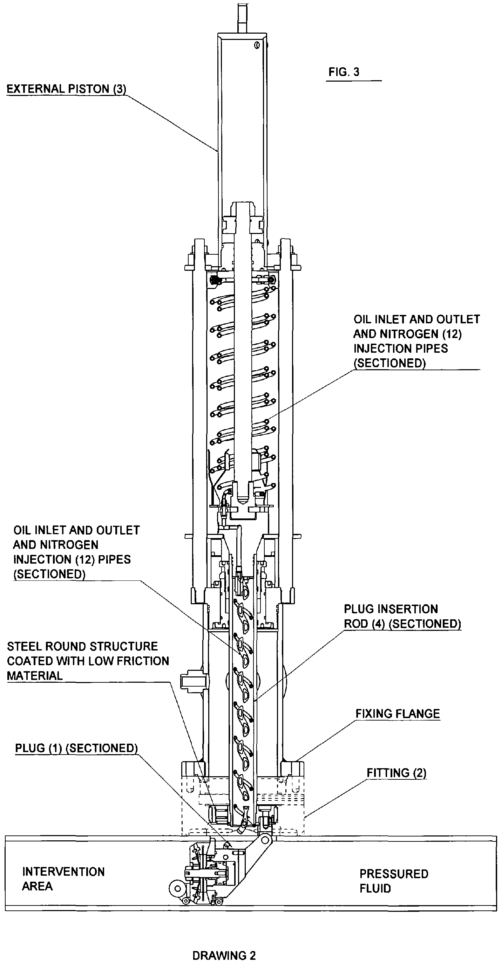

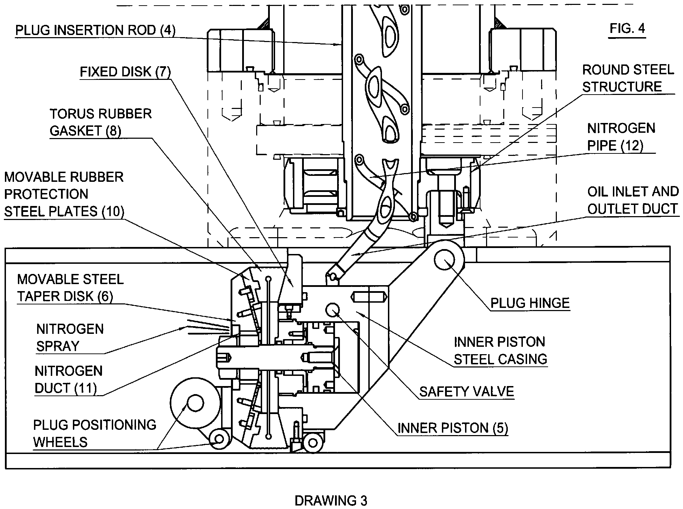

## Claims

1. Oleodynamic plugging machine that is a device for the execution of plugging intervention on a pressure fluid supply pipe in service, said machine comprising a plug (1), a cylindrical steel casing flanged in its lower side to be fastened on fittings or valves (2) that are welded to the pipe, a first hydraulic piston (3) which energizes a plug insertion rod in form of a steel rod (4) that launches i.e. inserts the plug (1) inside the intervention pipe, with an inner hydraulic piston (5) inside the plug (1);
two steel taper disks (6, 7) comprising a movable steel tapered disk (6) and a fixed disk (7), that, when the inner hydraulic piston is operated, are brought near causing the compression in radius direction of a rubber gasket torus (8) shaped so that when the movable steel tapered disk (6) gets nearer to the fixed disk (7) so it makes the rubber gasket torus (8) between them expand radially to engage the inner pipe wall; wherein said plug insertion rod (4) is axially arranged inside said steel casing and in use extends inside said fitting or valve (2), and the plug (1) is hinged to the lower end of a round steel structure; and
said round steel structure is fixed to the lower end of said plug insertion rod (4), which is inserted during operations in a hole made in the pipe so as to avoid the plug to be displaced when inside the pipe; the oleodynamic plugging machine being **characterised in that** the first hydraulic piston (3) is assembled on four columns over the top of the casing and further being **characterised by** a set of movable steel plates (10) which are attached in radial direction on the tapered surface of the movable steel tapered disk (6) so that, when the movable steel tapered disk (6) moves towards the fixed disk (7), the steel plates follow the expansion of the rubber gasket torus (8) to which they are attached in a radial direction such that their function is to avoid that the rubber gasket torus (8) is extruded, that is extracted from its place by the fluid pressure.

2. The oleodynamic plugging machine that is a device according to claim 1, wherein the plug is arranged with a system of internal ducts (11) by means of which nitrogen, conveyed inside the plug (1) by means of the pipe (12), can be ejected ahead the plug (1) to assure that in the zone where the intervention on the pipe is performed, including welding operation the atmosphere is inert.

3. The oleodynamic plugging machine that is a device according to claim 1, **characterised in that** an oil inlet and outlet duct extends along said steel rod (4) for operating said plug (1).

## Patentansprüche

1. Öldynamische Verschlussmaschine, das heißt eine Vorrichtung zur Ausführung eines Verschlusseingriffs an einem Druckfluid-Versorgungsrohr im Betrieb, wobei die Maschine Folgendes beinhaltet: einen Verschluss (1), ein zylindrisches Stahlgehäuse, geflanscht an dessen unteren Seite, um auf Armaturen oder Ventilen (2) befestigt zu werden, die an dem Rohr angeschweißt sind, einen ersten Hydraulikkolben (3), der einer Verschlusseinführungsstange in Form einer Stahlstange (4) Energie verleiht, die den Verschluss (1) innerhalb des Eingriffsrohrs, mit einem inneren Hydraulikkolben (5) innerhalb des Verschluss (1), vorschiebt, d. h. einführt;
zwei Stahlkegelscheiben (6, 7), die eine bewegbare kegelige Stahlscheibe (6) und eine fixierte Scheibe (7) beinhalten, die, wenn der innere Hydraulikkolben betrieben wird, genähert werden, wodurch das Zusammendrücken in Radiusrichtung eines Gummidichtungstorus (8) verursacht wird, der derart geformt ist, dass, wenn die bewegbare kegelige Stahlscheibe (6) der fixierten Scheibe (7) näher kommt, der Gummidichtungstorus (8) zwischen ihnen dabei radial expandiert wird, um die innere Rohrwand in Eingriff zu nehmen;
wobei die Verschlusseinführungsstange (4) innerhalb des Stahlgehäuses axial angeordnet ist und sich bei Verwendung innerhalb der Armatur oder dem Ventil (2) erstreckt, und der Verschluss (1) am unteren Ende einer runden Stahlstruktur gelenkig angebracht ist; und
die runde Stahlstruktur an dem unteren Ende der Verschlusseinführungsstange (4) fixiert ist, die während Vorgängen in einem in dem Rohr gefertigten Loch eingeführt wird, um zu vermeiden, dass der Verschluss verschoben wird, wenn er innerhalb des Rohrs ist;
die öldynamische Verschlussmaschine **dadurch gekennzeichnet ist, dass** der erste Hydraulikkolben (3) auf vier Säulen über der Oberseite des Gehäuses montiert ist, und ferner **gekennzeichnet durch** einen Satz bewegbarer Stahlplatten (10), die in radialer Richtung auf der kegeligen Oberfläche der bewegbaren kegeligen Stahlscheibe (6) befestigt sind, sodass, wenn sich die bewegbare kegelige Stahlscheibe (6) zu der fixierten Scheibe (7) hin bewegt, die Stahlplatten der Expansion des Gummidichtungstorus (8), an dem sie befestigt sind, in einer radialen Richtung folgen, sodass ihre Funktion darin besteht, zu vermeiden, dass der Gummidichtungstorus (8) extrudiert wird, das heißt durch den Fluiddruck von seinem Platz extrahiert wird.

2. Öldynamische Verschlussmaschine, das heißt eine Vorrichtung gemäß Anspruch 1, wobei der Verschluss mit einem System interner Leitungen **(11)** angeordnet ist, durch die Stickstoff, der innerhalb des Verschlusses **(1)** durch das Rohr **(12)** befördert wird, vor dem Verschluss **(1)** ausgestoßen werden kann, um sicherzustellen, dass in der Zone, in der der Eingriff an dem Rohr durchgeführt wird, einschließlich einem Schweißvorgang, die Atmosphäre inert ist.

3. Öldynamische Verschlussmaschine, das heißt eine Vorrichtung gemäß Anspruch 1, **dadurch gekennzeichnet, dass** sich eine Öleinlass- und Ölauslassleitung entlang der Stahlstange (4) zum Betreiben des Verschlusses (1) erstreckt.

## Revendications

1. Machine à boucher oléodynamique, étant un dispositif pour l'exécution d'une intervention d'obturation sur une conduite d'alimentation de fluide sous pression en service, ladite machine comprenant un obturateur (1),
une enveloppe cylindrique en acier bridée sur sa partie inférieure pour permettre sa fixation sur des raccords ou des vannes (2) soudés sur la conduite, un premier piston hydraulique (3) activant une tige d'insertion de l'obturateur sous forme d'une tige d'acier (4) lançant, autrement dit insérant l'obturateur (1) à l'intérieur de la conduite d'intervention, avec un piston hydraulique (5) à l'intérieur de l'obturateur (1) ;
deux disques d'acier coniques (6, 7) comprenant un disque conique mobile en acier (6) et un disque fixe (7), qui, lors de l'actionnement du piston hydraulique intérieur, sont rapprochés, en entraînant la compression dans la direction radiale d'un tore de joint en caoutchouc (8) façonné de sorte que le rapprochement du disque conique mobile en acier (6) du disque fixe (7) entraîne l'expansion radiale du tore de joint en caoutchouc (8), pour s'engager avec la paroi intérieure de la conduite ;
ladite tige d'insertion de l'obturateur (4) étant agencée axialement à l'intérieur de ladite enveloppe d'acier, et, en cours d'usage, s'étendant à l'intérieur desdits raccord ou vanne (2), et l'obturateur (1) s'articulant avec l'extrémité inférieure d'une structure d'acier arrondie ; et
ladite structure d'acier arrondie étant fixée sur l'extrémité inférieure de ladite tige d'insertion de l'obturateur (4), qui est insérée, en service, dans un orifice pratiqué dans la conduite de façon à éviter le déplacement de l'obturateur à l'intérieur de la conduite ;
la machine à boucher oléodynamique étant **caractérisée** d'une part par le fait que le premier piston hydraulique (3) est assemblé sur quatre colonnes sur la partie supérieure de l'enveloppe, d'autre part par un jeu de plaques d'acier mobiles (10) fixées dans une direction radiale à la surface conique du disque conique mobile en acier (6), de sorte que lors du déplacement du disque conique mobile en acier (6) vers le disque fixe (7), les plaques d'acier suivent l'expansion du tore de joint en caoutchouc (8) sur lequel elles sont fixées, dans une direction radiale, afin que leur fonction soit la prévention de l'extrusion du tore de joint en caoutchouc (8), c'est-à-dire l'extraction de son emplacement par la pression du fluide.

2. Machine à boucher oléodynamique, étant un dispositif selon la revendication 1, l'obturateur étant agencé avec un système de conduits internes (11) par l'intermédiaire desquels de l'azote, transporté à l'intérieur de l'obturateur (1) par le biais de la conduite (12), puisse être évacué avant l'obturateur (1), afin d'assurer que dans la zone où se déroule l'intervention sur la conduite, y compris l'opération de soudage, l'atmosphère soit inerte.

3. Machine à boucher oléodynamique, étant un dispositif selon la revendication 1, **caractérisée en ce qu'**une conduite d'amenée et de refoulement d'huile s'étende le long de ladite tige d'acier (4) pour l'actionnement dudit obturateur (1).
